# EUROPÄISCHE PATENTSCHRIFT

(11) **EP 3 103 661 B1**
(45) Veröffentlichungstag und Bekanntmachung des Hinweises auf die Patenterteilung: **08.08.2018**
(21) Anmeldenummer: 15171755.0
(22) Anmeldetag: 12.06.2015
(51) Int. Cl.: B60C 19/08, B29D 30/52, B29D 30/06, B29D 30/72

(54) **VERFAHREN ZUR HERSTELLUNG EINER ELEKTRISCH LEITFÄHIGEN PASSAGE IN EINEM FAHRZEUGLUFTREIFEN**
METHOD FOR MANUFACTURING AN ELECTRICALLY CONDUCTIVE PASSAGE IN A VEHICLE TYRE
PROCEDE DE FABRICATION D'UN PASSAGE ELECTROCONDUCTEUR DANS UN PNEUMATIQUE DE VEHICULE

(43) Veröffentlichungstag der Anmeldung: 14.12.2016
(73) Patentinhaber: Continental Reifen Deutschland GmbH, 30165 Hannover (DE)
(72) Erfinder: Rose, Christoph, 30982 Pattensen (DE)
(74) Vertreter: Finger, Karsten

(56) Entgegenhaltungen:
- EP-A1- 1 803 589
- EP-A1- 2 520 420
- DE-A1-102010 037 004
- DE-A1-102010 037 711
- US-A1- 2006 042 733

## Beschreibung

Die Erfindung betrifft ein Verfahren zur Herstellung einer elektrisch leitfähigen Passage in einem Fahrzeugluftreifen gemäß dem Oberbegriff des Anspruchs 1. Es ist bekannt und üblich, die zur Reifenfertigung erforderlichen Gummibauteile aus Kautschukmischungen unterschiedlicher Zusammensetzungen zu fertigen, um die Eigenschaften der Gummibauteile an ihre jeweiligen Anforderungen im fertigen Reifen anzupassen. Dabei ist es üblich, in Laufstreifen Mischungsverbände bestehend aus einer Laufstreifencap und einer radial innerhalb der Laufstreifencap verlaufenden Laufstreifenbase einzusetzen, wobei zur Erzielung eines niedrigen Rollwiderstandes und eines guten Nassgriffes Kieselsäuren (Silica) alleine oder in Kombination mit Ruß als Füllstoffe in den Kautschukmischungen der Laufstreifenbase und/oder der Laufstreifencap eingesetzt werden. Seitenwände aus Silica gefüllten Kautschukmischungen sind ebenfalls für einen niedrigen Rollwiderstand von Vorteil. Der Einsatz von Silica in der Gürtelgummierung ist wegen des erhöhten Weiterreißwiderstands für die Schnitt- und Rissbeständigkeit der Gürtelgummierung günstig.

Aus mit Silica gefüllten Kautschukmischungen gefertigte Reifenbauteile weisen gegenüber Reifenbauteilen aus ausschließlich mit Ruß gefüllten Kautschukmischungen eine deutlich geringere elektrische Leitfähigkeit auf, sodass Maßnahmen zur Ableitung der beim Fahren auftretenden elektrostatischen Aufladungen erforderlich sind. Hierzu ist es beispielsweise üblich, Laufstreifen mit Cap/Base-Aufbau mit einem sogenannten Carbon Center Beam, welcher meist ein in der Laufstreifencap eingebauter und über den Umfang des Reifens verlaufender elektrisch leitfähiger Gummistreifen ist, zu versehen. Dieser Gummistreifen ist aus einer rußgefüllten Kautschukmischung gefertigt und ist mit der elektrisch leitfähigen Laufstreifenbase in Kontakt. Für den Einsatz dieser Technologie ist es erforderlich, dass im Reifen zumindest eine elektrisch leitfähige Verbindung, ein "Leitweg", von der Reifenfelge zu dem beim Fahren mit dem Untergrund in Kontakt tretenden Laufstreifenteil besteht. Ein derartiger Leitweg kann eine elektrisch leitfähige Gürtelgummierung, eine elektrisch leitfähige Karkasseinlage oder eine elektrisch leitfähige Innenschicht und das mit der Felge in Kontakt trennende elektrisch leitfähige Hornprofil umfassen. Alternativ kann die Ableitung elektrostatischer Aufladungen auch über eine elektrisch leitfähige Seitenwand oder eine im Bereich der Seitenwand vorgesehene elektrisch leitfähige Passage, welche entweder direkt oder über weitere Reifenbauteile mit dem Hornprofil in Kontakt tritt, erfolgen.

Ein Verfahren der eingangs genannten Art ist beispielsweise aus der EP 1 803 589 A1 bekannt. Zur Herstellung einer elektrisch leitfähigen Passage im Seitenwandbereich wird auf ein Profil, gebildet aus der Kautschukmischung der Seitenwand und der Kautschukmischung des Homprofiles, ein elektrisch leitfähiges Kautschukmischungsband spiralförmig aufgebracht.

Weitere Verfahren zur Herstellung von leitfähigen Passagen in Reifen sind beispielsweise aus der DE 10 2008 036 451 B4 und der DE 10 2008 058 881 A1 bekannt. Bei dem aus der DE 10 2010 037 004 A1 bekannten Verfahren wird zwischen der Felge und zumindest einem elektrisch leitfähigen Bauteil eine elektrisch leitfähige Passage von einem Faden, einem Strang oder einem bandartigen Element gebildet. Bei dem aus der DE 10 2008 036 451 B4 bekannten Verfahren wird ein elektrisch leitfähiges Gummimaterial im Schulterbereich des Reifens aufgebracht, sodass dieses abwechselnd eine erste Stelle, die zur Lauffläche des Schulterbereiches hin freiliegt, und eine zweite Stelle, die mit der Felge oder einem leitfähigen Gummimaterial in Kontakt tritt, berührt. Aus der DE 10 2010 037 711 A1 ist ein Verfahren bekannt, bei welchem Streifen aus einer elektrisch leitfähigen Kautschukmischung nach dem Gummieren der Festigkeitsträger der Karkasslage mit einem Extruder auf die Karkasslage aufgebracht werden. Im fertigen Reifen bilden die Streifen elektrisch leitfähige Passagen zwischen dem Gürtelpaket und den Hornprofilen.
Ferner sind beispielsweise aus der DE 10 2007 039 100 A1 und der DE 10 2007 039 101 A1 Verfahren bekannt, welche ein einfaches Einbringen von elektrisch leitfähigem Material in einen Laufstreifen gestatten sollen. Dabei wird ein extrudierter Laufstreifen in seiner Längsrichtung durchgeschnitten (DE 10 2007 039 100 A1) oder es wird nur ein Teil, insbesondere eine Hälfte, eines Laufstreifens extrudiert (DE 10 2007 039 101 A1). Nachfolgend wird an den gebildeten Schnittflächen bzw. an den Stirnflächen elektrisch leitfähiges Material angebracht und die Laufstreifenteile werden zusammengefügt. Als elektrisch leitfähige Materialien können eine elektrisch leitfähige Kautschukmischung oder eine Lösung, eine Paste, ein Pulver oder ein Granulat aus einem elektrisch leitfähigen Material verwendet werden.
Der Erfindung liegt die Aufgabe zugrunde, ein Verfahren der eingangs genannten Art zur Verfügung zu stellen, mit dem elektrisch leitfähige Passagen zur Ableitung der beim Fahren entstehenden elektrostatischen Aufladungen in einem Fahrzeugluftreifen, welcher elektrisch nicht leitfähige Seitenwände aufweist, auf einfache Weise hergestellt werden können.

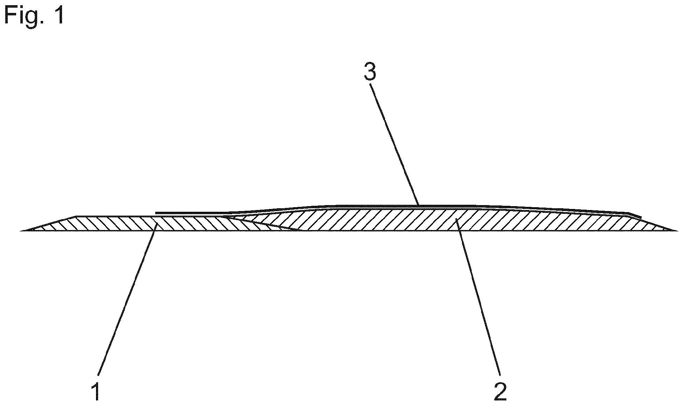

Die gestellte Aufgabe wird erfindungsgemäß durch ein Verfahren gemäß den Merkmalen des unabhängigen Anspruchs 1 gelöst. Bevorzugte Ausgestaltungen des Verfahrens finden sich in den abhängigen Ansprüchen. Das erfindungsgemäße Verfahren zeichnet sich unter anderem dadurch aus, dass als elektrisch leitfähiges Material eine elektrisch leitfähige Suspension aus zumindest einer elektrisch leitfähigen Kautschukmischung und einem organischen Lösungsmittel mit einem Siedepunkt kleiner 100° C in Strich- oder Streifenform oder flächig, insbesondere vollflächig, aufgebracht wird.
Das organische Lösungsmittel der leitfähigen Suspension verdampft auf Grund seiner Flüchtigkeit binnen kurzer Zeit nach dem Aufbringen, sodass die leitfähige
Kautschukmischung in Form einer dünnen Schicht auf dem jeweiligen elektrisch nicht leitfähigen Reifenbauteil verbleibt. Da die Suspension auf einer Kautschukmischung basiert, kann eine Kovulkanisation der dünnen Schicht mit angrenzenden Bauteilen im Reifen sichergestellt werden. Erfindungsgemäß wird die elektrisch leitfähige Suspension durch Aufdrucken, beispielsweise mittels eines Tintendruck- oder eines Tintenstrahldruckverfahrens, aufgebracht. Diese Druckverfahren gestatten ein besonders rationelles Auftragen der elektrisch leitfähigen Suspension. Die elektrisch leitfähige Suspension soll auf besonders zuverlässige Weise eine oder mehrere elektrisch leitfähige Passagen im fertigen Reifen bilden. Bei einer bevorzugten Ausführungsform der Erfindung wird dies dadurch sichergestellt, dass die elektrisch leitfähige Suspension auf die im fertigen Reifen die Innenseite der Seitenwand bzw. des Hornprofiles bildende Seite von durch Koextrusion hergestellten Seitenwand- und Hornprofil-Materialbahnen aufgebracht wird. Auf diese Weise lässt sich auch das Aufbringen der elektrisch leitfähigen Suspension gut in das Herstellverfahren des Reifens einbinden. Diese Möglichkeit besteht auch bei einer weiteren Ausführungsform der Erfindung, bei der die elektrisch leitfähige Suspension auf die im fertigen Reifen die Außenseite der Karkasseinlage bildende Seite der Karkasseinlage aufgebracht wird.
Um nun gutes Einbinden der zur Herstellung der Suspension verwendeten Kautschukmischung bei der Vulkanisation des Reifens sicher zu stellen, wird eine Kautschukmischung verwendet, die eine Kautschukmischung eines Reifenbauteiles ist, mit welchem die aus der Suspension erstellte elektrisch leitfähige Passage in Kontakt kommt. Besonders bevorzugt ist dabei eine Ausführung, bei der die Suspension die Kautschukmischung des Hornprofiles enthält.
Eine gute Kovulkanisation wird ferner dadurch unterstützt, dass die Suspension 50 g bis 150 g, insbesondere 75 g bis 125 g, Kautschukmischung pro Kilogramm organischem Lösungsmittel enthält.
Besonders vorteilhaft ist es ferner, wenn das Lösungsmittel ein flüssiges, mit Kautschuk chemisch verträgliches Alkan oder Alken ist. Das eingesetzte Lösungsmittel sollte vorzugsweise einen möglichst niedrigen Siedepunkt aufweisen, insbesondere einen Siedepunkt kleiner 100°C. Als Lösungsmittel kommt daher gemäß einem weiteren Merkmal der Erfindung insbesondere Hexan in Frage. Ferner offenbart ist ein Fahrzeugluftreifen, welcher gemäß dem erfindungsgemäßen Verfahren hergestellt ist.
Weitere Merkmale, Vorteile und Einzelheiten der Erfindung werden nun anhand der einzigen Figur, Fig. 1, in welcher schematisch eine Schnittansicht von koextrudierten Reifenbauteilen dargestellt ist, näher erläutert.

Die Erfindung befasst sich mit einem Verfahren zur Herstellung von elektrisch leitfähigen Passagen in Seitenwandbereichen von Fahrzeugluftreifen. Die elektrisch leitfähigen Passagen verlaufen im fertigen Reifen jeweils zwischen dem Laufstreifen bzw. einem Laufstreifenteil und einem Wulstbauteil, der elektrisch leitfähig ist und bei auf einer Felge montiertem Reifen in elektrisch leitfähiger Verbindung zur Felge steht, insbesondere in Kontakt mit der Felge ist.

Der Laufstreifen des Fahrzeugluftreifens ist als elektrisch leitfähiger Monolaufstreifen ausgeführt oder ist in radialer Richtung zweischichtig und aus einer elektrisch leitfähigen Laufstreifenbase und einer elektrisch nicht leitfähigen Laufstreifencap aufgebaut. Ist ein Cap/Base - Aufbau vorgesehen, ist im Laufstreifen zumindest ein insbesondere in an sich bekannter Weise zur Laufstreifenaußenfläche verlaufender elektrisch leitfähiger Gummistreifen, insbesondere ein Carbon Center Beam, eingebaut. Der Wulstbauteil ist insbesondere ein unmittelbar mit der Felge in Kontakt kommendes Hornprofil, welches, wie an sich bekannt und üblich, aus einer elektrisch leitfähigen Kautschukmischung hergestellt ist. Unter einem elektrisch leitfähigen Gummimaterial wird im Rahmen der gegenständlichen Erfindung ein solches verstanden, welches einen elektrischen Widerstand < 10⁸ Ohm aufweist.

Fig. 1 zeigt einen schematischen Querschnitt einer Hornprofil-Materialbahn 1 und einer Seitenwand-Materialbahn 2, wobei diese Materialbahnen 1, 2 durch Koextrusion hergestellt sind.

Die der Seitenwand-Materialbahn 2 zugrundeliegende Kautschukmischung enthält als Füllstoff Silica (Kieselsäure) und ist elektrisch nicht leitfähig. Die der Hornprofil-Materialbahn 1 zugrundeliegende Kautschukmischung enthält als Füllstoff Ruß und ist elektrisch leitfähig.

Auf die im fertig aufgebauten Reifen jeweils die Innenseite der Seitenwand bzw. des Hornprofiles bildende obere Seite der koextrudierten Materialbahnen 1, 2 wird eine elektrisch leitfähige Suspension 3 aufgebracht. Die elektrisch leitfähige Suspension 3 wird automatisch durch Aufdrucken, insbesondere mittels eines Tintendruck- oder Tintenstrahldruckverfahrenes, auf die Materialbahnen 1, 2 aufgebracht. Die Suspension 3 wird dabei zwischen jenem Randbereich der Seitenwand-Materialbahn 2, welcher im fertigen Reifen mit einem elektrisch leitfähigen Laufstreifenteil in Kontakt tritt, und dem Randbereich oder dem mittleren Bereich der Hornprofil-Materialbahn 1 durchgehend, insbesondere geradlinig, alternativ auch wellenförmig oder dergleichen, strich- oder streifenförmig aufgetragen. Alternativ ist auch ein flächiger Auftrag, insbesondere vollflächig, möglich.
Die elektrisch leitfähige Suspension 3 besteht vorzugsweise aus einem flüchtigen organischen Lösungsmittel mit einem Siedepunkt kleiner 100°C und einer darin fein verteilten elektrisch leitfähigen Kautschukmischung. Bei der Wahl des organischen Lösungsmittels ist auf eine entsprechende Verträglichkeit mit der jeweiligen Kautschukmischung zu achten. Als Lösungsmittel kommen Alkene oder Alkane, beispielsweise Hexan, in Frage. Als Kautschukmischung wird vorzugsweise die für das Hornprofil vorgesehene Kautschukmischung verwendet. Die Suspension 3 enthält pro Kilogramm organischem Lösungsmittel die Kautschukmischung in einer Menge von 50 g bis 150 g, insbesondere in einer Menge von 75 g bis 125 g, und besonders bevorzugt in einer Menge von 90 g bis 110 g.
Die nachfolgende Tabelle enthält ein Beispiel für die grundsätzliche Zusammensetzung einer üblichen Hornprofil-Kautschukmischung, welche zur Herstellung der Suspension 3 eingesetzt werden kann. Die Mengenangaben erfolgen in der in der Kautschuktechnologie üblichen Einheit phr (parts per hundred rubber), welche sich jeweils auf die Massenteile des Grundpolymers bzw. bei Polymerblends auf jene der Grundpolymere beziehen. Die für die Suspension 3 eingesetzte Kautschukmischung enthält als Füllstoff Ruß in einem Anteil von 50 phr bis 100 phr, insbesondere in einem Anteil von 60 phr bis 80 phr.

**Tabelle 1: Mischungsbeispiel**

| **Bestandteil** | **Menge [phr]** |
|---|---|
| Naturkautschuk | 25,0 |
| Butadien-Kautschuk | 75,0 |
| Ruß N 121 | 75,0 |
| Weichmacher | 8,0 |
| Zinkoxid | 3,5 |
| Beschleuniger (TBBS) | 2,6 |
| Schwefel | 2,2 |

Alternativ kann die Suspension 3 auch auf andere über den Seitenwandbereich verlaufende Reifenbauteile, beispielsweise auf die im fertigen Reifen die Außenseite der Karkasseinlage bildende Seite der Karkasseinlage, aufgebracht werden.

### Bezugsziffernliste

1 .................... Materialbahn
2 .................... Materialbahn
3 .................... Suspension

## Patentansprüche

1. Verfahren zur Herstellung einer elektrisch leitfähigen Passage in einem Fahrzeugluftreifen, welche im Seitenwandbereich zwischen einem elektrisch leitfähigen Laufstreifenteil und einem elektrisch leitfähigen Wulstbauteil, der bei auf einer Felge montiertem Reifen in elektrisch leitender Verbindung mit der Felge steht, verläuft, **dadurch gekennzeichnet,**
**dass** auf die eine Seite von zumindest einem rohen Reifenbauteil, welcher im fertig aufgebauten Reifen über den Seitenwandbereich verläuft, als elektrisch leitfähige Passage(n) eine elektrisch leitfähige Suspension (3) aus zumindest einer elektrisch leitfähigen Kautschukmischung und einem organischen Lösungsmittel mit einem Siedepunkt kleiner 100°C in Strich- oder Streifenform oder flächig, insbesondere vollflächig, aufgebracht wird, und
**dass** die elektrisch leitfähige Suspension (3) durch Aufdrucken, beispielsweise mittels eines Tintendruck- oder eines Tintenstrahldruckverfahrenes, aufgebracht wird.

2. Verfahren nach Anspruch 1, **dadurch gekennzeichnet, dass** die elektrisch leitfähige Suspension (3) auf die im fertigen Reifen die Innenseite der Seitenwand bzw. des Hornprofiles bildende Seite von durch Koextrusion hergestellten Seitenwand- und Hornprofil -Materialbahnen (1, 2) aufgebracht wird.

3. Verfahren nach einem der Ansprüche 1 oder 2, **dadurch gekennzeichnet, dass** die elektrisch leitfähige Suspension (3) auf die im fertigen Reifen die Außenseite der Karkasseinlage bildende Seite der Karakasseinlage aufgebracht wird.

4. Verfahren nach einem der Ansprüche 1 bis 3, **dadurch gekennzeichnet, dass** die zur Herstellung des Suspension verwendete Kautschukmischung eine Kautschukmischung eines Reifenbauteiles ist, mit welchem die aus der Suspension (3) erstellte elektrisch leitfähige Passage in Kontakt kommt.

5. Verfahren nach einem der Ansprüche 1 bis 4, **dadurch gekennzeichnet, dass** die Suspension (3) die Kautschukmischung des Hornprofiles enthält.

6. Verfahren nach einem den Ansprüche 1 bis 5, **dadurch gekennzeichnet, dass** die Suspension 50 g bis 150 g, insbesondere 75 g bis 125 g, Kautschukmischung pro Kilogramm organischem Lösungsmittel enthält.

7. Verfahren nach einem der Ansprüche 1 bis 6, **dadurch gekennzeichnet, dass** die Suspension 90 g bis 110 g Kautschukmischung pro Kilogramm organischem Lösungsmittel enthält.

8. Verfahren nach einem der Ansprüche 1 bis 7, **dadurch gekennzeichnet, dass** das Lösungsmittel ein flüssiges, mit Kautschuk chemisch verträgliches Alkan oder Alken ist.

9. Verfahren nach einem der Ansprüche 1 bis 8, **dadurch gekennzeichnet, dass** das Lösungsmittel Hexan ist.

## Claims

1. Method for producing an electrically conductive passage in a pneumatic vehicle tyre that runs in the sidewall region between an electrically conductive tread part and an electrically conductive bead component which, when the tyre is fitted on a rim, is in electrically conducting connection with the rim,
**characterized**
**in that** an electrically conductive suspension (3) comprising at least one electrically conductive rubber compound and an organic solvent with a boiling point of less than 100°C is applied as electrically conductive passage(s) in the form of a line or strip or over the surface area, in particular over the full surface area, to one side of at least one unvulcanized tyre component that runs over the sidewall region in the fully assembled tyre, and
**in that** the electrically conductive suspension (3) is applied by being printed on, for example by means of an ink printing or inkjet printing process.

2. Method according to Claim 1, **characterized in that** the electrically conductive suspension (3) is applied to the side of sidewall and flange-profile material webs (1, 2), produced by coextrusion, that forms the inner side of the sidewall or the flange profile in the finished tyre.

3. Method according to either of Claims 1 and 2, **characterized in that** the electrically conductive suspension (3) is applied to the side of the carcass inlay that forms the outer side of the carcass inlay in the finished tyre.

4. Method according to one of Claims 1 to 3, **characterized in that** the rubber compound used for producing the suspension is a rubber compound of a tyre component with which the electrically conductive passage created from the suspension (3) comes into contact.

5. Method according to one of Claims 1 to 4, **characterized in that** the suspension (3) contains the rubber compound of the flange profile.

6. Method according to one of Claims 1 to 5, **characterized in that** the suspension contains 50 g to 150 g, in particular 75 g to 125 g, of rubber compound per kilogram of organic solvent.

7. Method according to one of Claims 1 to 6, **characterized in that** the suspension contains 90 g to 110 g of rubber compound per kilogram of organic solvent.

8. Method according to one of Claims 1 to 7, **characterized in that** the solvent is a liquid alkane or alkene that is chemically compatible with rubber.

9. Method according to one of Claims 1 to 8, **characterized in that** the solvent is hexane.

## Revendications

1. Procédé de création d'un passage électriquement conducteur dans un pneu de véhicule, lequel s'étend dans la zone de paroi latérale entre une zone de surface de contact au sol électriquement conductrice et un composant de talon de pneu électriquement conducteur qui, lorsque le pneu est monté sur une jante, se trouve en liaison électriquement conductrice avec la jante, **caractérisé en ce que**
sur un côté d'au moins un composant de talon de pneu brut qui, lorsque le pneu est entièrement monté, s'étend sur la zone de paroi latérale, une suspension (3) électriquement conductrice composée d'au moins un mélange de caoutchouc électriquement conducteur et d'un solvant organique ayant un point d'ébullition inférieur à 100 °C est appliquée en tant que passage (s) électriquement conducteur(s) sous forme de trait ou de bande, notamment sur toute la surface, et
**en ce que** la suspension (3) électriquement conductrice est appliquée par impression, par exemple au moyen d'un procédé d'impression à encre ou à jet d'encre.

2. Procédé selon la revendication 1, **caractérisé en ce que** la suspension (3) électriquement conductrice est appliquée sur le côté de bandes de matière (1, 2) de paroi latérale et de profilé de rebord fabriquées par coextrusion qui, dans le pneu fini, forme le côté intérieur de la paroi latérale ou du profilé de rebord.

3. Procédé selon l'une des revendications 1 ou 2, **caractérisé en ce que** la suspension (3) électriquement conductrice est appliquée sur le côté de la nappe de carcasse qui, dans le pneu fini, forme le côté extérieur de la nappe de carcasse.

4. Procédé selon l'une des revendications 1 à 3, **caractérisé en ce que** le mélange de caoutchouc utilisé pour fabriquer la suspension est un mélange de caoutchouc d'un composant de pneu avec lequel entre en contact le passage électriquement conducteur créé à partir de la suspension (3).

5. Procédé selon l'une des revendications 1 à 4, **caractérisé en ce que** la suspension (3) contient le mélange de caoutchouc du profilé de rebord.

6. Procédé selon l'une des revendications 1 à 5, **caractérisé en ce que** la suspension contient de 50 g à 150 g, notamment de 75 g à 125 g de mélange de caoutchouc par kilogramme de solvant organique.

7. Procédé selon l'une des revendications 1 à 6, **caractérisé en ce que** la suspension contient de 90 g à 110 g de mélange de caoutchouc par kilogramme de solvant organique.

8. Procédé selon l'une des revendications 1 à 7, **caractérisé en ce que** le solvant est un alcane ou un alcène liquide compatible chimiquement avec le caoutchouc.

9. Procédé selon l'une des revendications 1 à 8, **caractérisé en ce que** le solvant est de l'hexane.
